(19) Europäisches Patentamt
European Patent Office
Office européen des brevets

(11) EP 3 356 428 B1

(12) FASCICULE DE BREVET EUROPEEN

(45) Date de publication et mention de la délivrance du brevet:
**12.02.2020 Bulletin 2020/07**

(21) Numéro de dépôt: **16788157.2**

(22) Date de dépôt: **30.09.2016**

(51) Int Cl.:
***C08F 20/28*** (2006.01)

(86) Numéro de dépôt international:
**PCT/FR2016/052502**

(87) Numéro de publication internationale:
**WO 2017/055767 (06.04.2017 Gazette 2017/14)**

# (54) PROCÉDÉ DE SYNTHÈSE DE (CO)POLYMÈRES ACRYLIQUES A PARTIR D'OLIGOMÈRES DE L'ACIDE ACRYLIQUE

VERFAHREN ZUR SYNTHESE VON ACRYL(CO)POLYMEREN AUS ACRYLSÄUREOLIGOMEREN

METHOD FOR THE SYNTHESIS OF ACRYLIC (CO)POLYMERS FROM OLIGOMERS OF ACRYLIC ACID

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.10.2015 FR 1559391**

(43) Date de publication de la demande:
**08.08.2018 Bulletin 2018/32**

(73) Titulaire: **Arkema France**
**92700 Colombes (FR)**

(72) Inventeurs:
- **SUAU, Jean-Marc**
**69480 Lucenay (FR)**
- **CHAMPAGNE, Clémentine**
**69300 Caluire-et-cuire (FR)**

(74) Mandataire: **Albani, Dalila**
**ARKEMA France**
**Département Propriété Industrielle**
**420, rue d'Estienne d'Orves**
**92705 Colombes Cedex (FR)**

(56) Documents cités:
**EP-A2- 0 036 294**
**WO-A2-99/31153**
**WO-A2-2014/099512**
**US-A1- 2012 100 084**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

### DOMAINE TECHNIQUE

La présente invention concerne la synthèse d'un (co)polymère acrylique par polymérisation radicalaire en émulsion aqueuse, ledit (co)polymère comprenant au moins un oligomère de l'acide acrylique représenté par la formule (I) :

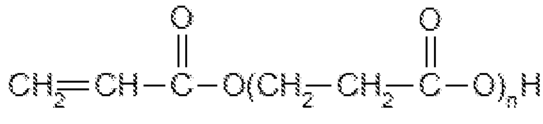

(I)

dans laquelle n est un entier allant de 1 à 10,
ledit oligomère étant préparé à partir de l'acide acrylique, à une température comprise entre 50°C et 200°C, en présence d'un catalyseur acide ou basique, d'eau et d'inhibiteurs de polymérisation.

La présente invention concerne également le (co)polymère acrylique obtenu par le procédé ainsi que l'utilisation de ce (co)polymère comme épaississant dans diverses formulations aqueuses, éventuellement pigmentées.

### ART ANTERIEUR

Plusieurs documents d'art antérieur décrivent des procédés de préparation d'oligomères de l'acide acrylique.

Le document US 4,267,365, notamment, décrit un procédé pour préparer des oligomères de l'acide acrylique par chauffage d'acide acrylique à une température comprise entre 50°C et 200°C et en présence d'inhibiteurs de polymérisation. Un tel procédé ne permet pas d'obtenir des rendements en dimères et trimères d'acide acrylique élevés.

Le document US 4,359,564, quant à lui, décrit la synthèse d'oligomères de l'acide acrylique utilisés en tant que co-monomères dans des polymérisations en solution ou en émulsion. Selon un des deux procédés de préparation des oligomères de l'acide acrylique décrit dans ce document, les monomères d'acide acrylique sont placés à une température de 80°C pendant 300 heures en présence d'Ether Méthylique d'HydroQuinone (EMHQ, inhibiteur de polymérisation), d'un éther couronne et d'acrylate de potassium. Le degré moyen d'oligomérisation de l'acide acrylique est de l'ordre de 3. Selon l'autre procédé décrit, les monomères d'acide acrylique sont chauffés pendant une durée plus courte (9,5 h ou 20 h) à une température plus élevée (120°C - 125°C) en présence d'une résine échangeuse d'ions fortement acide et d'un mélange de deux inhibiteurs de polymérisation. Selon la durée de réaction, le degré moyen d'oligomérisation de l'acide acrylique est de 1,4 ou 2. Ces procédés ne sont pas satisfaisants en ce qu'ils sont soit complexes à mettre en œuvre soit ne permettent pas d'obtenir le produit oligomère souhaité.

Le document US 2012/100084 décrit un mélange comprenant de l'acide acrylique, du 2-carboxyethyle acrylate et d'autres oligomères. Ces oligomères sont ensuite polymérisés en solution dans le n-butanol sans toutefois que soit utilisé un inhibiteur de polymérisation.

Les documens WO 99/31153 et WO 2014/099512 ne décrivent pas un polymère acrylique associatif comprenant au moins un mélange d'oligomères de l'acide acrylique et un inhibiteur de polymérisation.

Un premier objet de la présente invention est l'utilisation d'un mélange, par exemple sous forme de solution aqueuse, d'oligomères de l'acide acrylique dans des procédés de polymérisation radicalaire en émulsion aqueuse, ledit mélange comprenant une teneur élevée en dimères et trimères d'acide acrylique, par exemple supérieure à 20 % en poids. De manière plus générale, la synthèse d'oligomères de l'acide acrylique s'effectue toujours en présence d'au moins un inhibiteur de polymérisation (également appelé « stabilisant »). Les teneurs de ces inhibiteurs de polymérisation sont généralement relativement élevées ce qui conduit à un produit final fortement stabilisé. Ceci constitue un inconvénient lorsque les oligomères de l'acide acrylique doivent être utilisées dans des procédés de polymérisation, en tant que (co)monomères.

Ainsi, un autre objet de la présente invention est de proposer un mélange, par exemple sous forme de solution aqueuse, d'oligomères de l'acide acrylique qui puisse être utilisé dans des procédés de polymérisation radicalaire en émulsion aqueuse, sans que cela ne génère de retard de polymérisation ou une forte exothermie.

Le procédé de (co)polymérisation radicalaire en émulsion aqueuse de la présente invention met en œuvre un mélange d'oligomères de l'acide acrylique préparé selon un procédé spécifique qui permet d'obtenir des rendements élevés en oligomères de l'acide acrylique, par exemple en dimères et trimères d'acide acrylique, par exemple supérieurs à 20 % en poids, tout en limitant la quantité d'inhibiteurs de polymérisation. Il a en effet été trouvé que la présence d'une

faible quantité d'eau en association avec un catalyseur acide ou basique permet de réduire la consommation d'inhibiteurs de polymérisation au cours du procédé de préparation des oligomères de l'acide acrylique. Cette diminution de la consommation en inhibiteurs de polymérisation permet de contrôler globalement la teneur en inhibiteurs à utiliser au cours du procédé de production de ce mélange d'oligomères et, ainsi, d'obtenir une teneur en inhibiteurs dans le mélange final d'oligomères plus faible, ce qui est un avantage pour l'utilisation de ce mélange d'oligomères dans des procédés de polymérisation.

## BREVE DESCRIPTION DE L'INVENTION

La présente invention concerne un procédé de (co)polymérisation radicalaire en émulsion aqueuse d'au moins un mélange d'oligomères de l'acide acrylique représentés par la formule (I) :

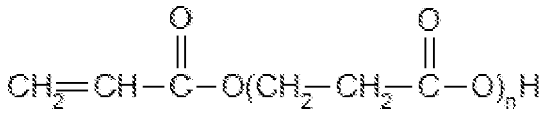

(I)

selon laquelle n est un entier compris entre 1 et 10 (bornes incluses),
lesdits oligomères étant préparés à partir de l'acide acrylique à une température comprise entre 50°C et 200°C en présence d'un catalyseur acide ou basique, d'eau et d'au moins un inhibiteur de polymérisation.

Selon un mode de réalisation de ce procédé, ledit mélange d'oligomères de l'acide acrylique contient de 10 ppm à 2 000 ppm d'inhibiteurs de polymérisation par rapport au poids total du mélange.

Selon un autre mode de réalisation de ce procédé, le milieu réactionnel utilisé pour préparer le mélange d'oligomères contient une quantité d'eau comprise entre 0,01 % et 20 % en poids par rapport au poids total d'acide acrylique mis en œuvre.

La présente invention concerne également le (co)polymère acrylique associatif comprenant au moins un mélange d'oligomères de l'acide acrylique représentés par la formule (I) :

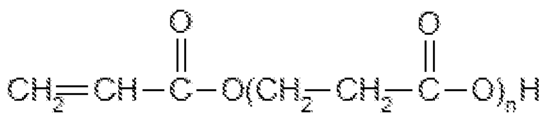

(I)

selon laquelle n est un entier compris entre 1 et 10 (bornes incluses),
lesdits oligomères étant préparés à partir de l'acide acrylique à une température comprise entre 50°C et 200°C en présence d'un catalyseur acide ou basique, d'eau et d'au moins un inhibiteur de polymérisation.

Selon un mode de réalisation de la présente invention, ce (co)polymère comprend en outre :

- au moins un monomère hydrophobe non ionique présentant une fonction vinylique polymérisable,
- éventuellement un monomère présentant une fonction vinylique polymérisable et une chaîne hydrocarbonée hydrophobe au moins en C10, de préférence de C12 à C36, éventuellement oxyalkylée, distinct du monomère (b),
- éventuellement un monomère réticulant et
- éventuellement un autre monomère additionnel, éventuellement non ionique, distinct du monomère (b).

## DEFINITIONS

Dans la description de la présente invention, le terme « ASE » est un acronyme pour « Alkali Soluble Emulsion » et le terme « HASE » est un acronyme pour « Hydrophobically modified Alkali Soluble Emulsion ». Les polymères HASE peuvent, par exemple, être obtenus par polymérisation en présence d'un agent tensioactif anionique, d'un monomère d'acide (méth)acrylique, d'un monomère de (méth)acrylate d'alkyle et d'un monomère hydrophobe constitué d'une chaîne aliphatique longue.

Dans la description de la présente invention, à moins qu'il n'en soit indiqué autrement, les pourcentages

exprimés représentent des pourcentages en poids et sont exprimés par rapport au poids total de l'élément de référence. Par exemple, lorsqu'il est indiqué qu'un (co)polymère comprend 10 % d'un monomère ou d'un réactif, il est entendu que le polymère comprend 10 % en poids de ce monomère ou réactif par rapport au poids total de ce polymère.

Dans la description de la présente invention, l'expression « au moins un » désigne un ou plusieurs composé(s).

Dans la suite du texte, les expressions « compris entre ... et ... », « allant de ... à ... » et « variant de ... à ... » sont équivalentes et entendent signifier que les bornes sont incluses, sauf mention contraire.

Sauf indication contraire, l'expression « comportant/comprenant un(e) » doit être comprise comme « comportant/comprenant au moins un(e) ».

## DESCRIPTION DETAILLEE DE L'INVENTION

La présente invention met en œuvre des oligomères de l'acide acrylique représentés par la formule (I) :

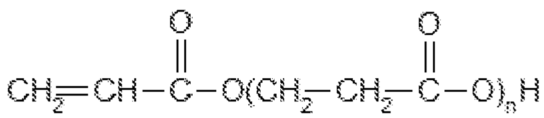

(I)

selon laquelle n est un entier compris entre 1 et 10 (bornes incluses).

Plus précisément, ces oligomères se trouvent sous forme d'un mélange de composés acides de formule (I) de différentes longueurs de chaîne en fonction de la valeur de n, par exemple comprenant le dimère d'acide acrylique (également appelé acide 3-(acryloyloxy)propionique, n = 1), le trimère d'acide acrylique (n = 2), le tétramère d'acide acrylique (n = 3), etc. Le mélange peut également contenir de l'acide acrylique non réagi (formule (I) dans laquelle n = 0).

Concernant le mélange d'espèces oligomériques en tant que tel, il est possible de le caractériser par un degré moyen d'oligomérisation qui correspond à la moyenne en nombre des espèces d'oligomères dans le mélange. Ce degré moyen d'oligomérisation peut, notamment, être déterminé à partir d'une mesure de l'indice d'acide du mélange. L'Indice d'Acide (IA en méq d'acide par gramme) peut être déterminé par un dosage potentiométrique. Le nombre moyen N d'oligomérisation est déterminé grâce à l'Indice d'Acide IA selon la formule :

$$N = -1{,}443 \ln (IA) + 3{,}7946$$

Le degré moyen d'oligomérisation du mélange d'espèces oligomériques de l'acide acrylique est un nombre décimal compris entre 0,1 et 10, par exemple entre 0,1 et 3 pour un produit essentiellement constitué d'une fraction riche en dimères et trimères ou, par exemple, entre 3 à 10 pour un produit qui contient essentiellement des oligomères de formule (I) avec n > 2.

Selon un mode de réalisation, pour chaque espèce polymérique du mélange, n dans la formule (I) ci-dessus est un entier compris entre 1 et 10, par exemple compris entre 1 et 6 ou entre 1 et 4.

Dans la suite de l'exposé, on dénomme :

- di-AA : le dimère d'acide acrylique,
- tri-AA : le trimère d'acide acrylique et
- oligo-AA : les espèces oligomères pour lesquels n > 2 dans la formule (I).

Le mélange d'oligomères de l'acide acrylique représentés par la formule (I) est susceptible de contenir de 10 ppm à 2 000 ppm d'inhibiteurs de polymérisation, par exemple de 50 ppm à 2 000 ppm ou de 100 ppm à 1 000 ppm, ou encore de 200 ppm à 500 ppm d'inhibiteurs de polymérisation par rapport au poids total du mélange.

Il peut s'avérer utile de diluer ce mélange d'oligomères avec un solvant, par exemple de l'eau, avant utilisation dans le procédé de la présente invention. Le mélange se trouve alors sous forme d'une solution aqueuse. La concentration de cette solution aqueuse en oligomères de l'acide acrylique peut varier. Par exemple, cette concentration varie entre 20 % et 50 % en poids d'oligomères.

Ces oligomères de l'acide acrylique sont préparés à partir d'acide acrylique à une température comprise entre 50°C et 200°C en présence d'un catalyseur acide ou basique, d'eau et d'inhibiteurs de polymérisation.

Le procédé de préparation du mélange d'oligomères de l'acide acrylique, en présence d'eau, dans ces conditions réactionnelles permet, en effet, d'obtenir des rendements élevés en dimères di-AA et trimères tri-AA, par exemple

supérieurs à 20 % en poids. Il permet, en outre, de limiter le taux de composés dérivés (par exemple 3-HPA) dans le mélange d'oligomères obtenus. Par ailleurs, ce procédé permet de limiter la quantité d'inhibiteurs de polymérisation, ce qui facilite l'utilisation dans des procédés où les oligomères sont (co)polymérisés en émulsion aqueuse, par exemple pour préparer un copolymère de type ASE ou HASE. Il a en effet été trouvé que la présence d'une faible quantité d'eau en association avec un catalyseur acide ou basique permet de réduire la consommation d'inhibiteurs de polymérisation au cours du procédé de préparation des oligomères de l'acide acrylique.

L'acide acrylique utilisé pour préparer ces oligomères peut être d'origine pétrochimique ou au moins en partie d'origine renouvelable.

Au cours du procédé de préparation des oligomères, on met en œuvre une température comprise entre 50°C et 200°C, par exemple comprise entre 80°C et 140°C ou entre 90°C et 120°C.

Le procédé de préparation des oligomères met en œuvre un catalyseur acide ou basique. Lorsqu'il est acide, ledit catalyseur de synthèse dudit oligomère de l'acide acrylique peut être un catalyseur acide homogène choisi dans le groupe consistant en l'acide méthane sulfonique, l'acide para-toluène sulfonique, l'acide benzène sulfonique, l'acide dodécylsulfonique, l'acide xylène sulfonique, l'acide sulfurique et un mélange d'au moins deux de ces catalyseurs. Alternativement, ledit catalyseur acide de synthèse dudit oligomère de l'acide acrylique peut être un catalyseur acide hétérogène sélectionné dans le groupe consistant en les résines échangeuses d'ions et les zéolithes acides.

Le procédé de préparation des oligomères met également en œuvre de l'eau. Selon un mode de réalisation, le milieu réactionnel contient une quantité d'eau par rapport au poids total d'acide acrylique mis en œuvre dans le procédé comprise entre 0,01 % et 20 % en poids, par exemple entre 0,1 % et 5 % en poids ou entre 0,5 % et 3 % en poids par rapport au poids total de monomères d'acide acrylique.

Egalement, le procédé de préparation des oligomères met en œuvre au moins un inhibiteur de polymérisation. Selon un mode de réalisation, le milieu réactionnel contient une faible quantité d'inhibiteurs de polymérisation par rapport au poids total d'acide acrylique mis en œuvre dans le procédé. Par « faible quantité d'inhibiteurs de polymérisation », on entend que la quantité d'inhibiteurs de polymérisation mise en œuvre est comprise entre 10 ppm et 2 000 ppm, par exemple de 50 ppm à 2 000 ppm ou de 100 ppm à 1 000 ppm ou encore de 200 ppm à 500 ppm d'inhibiteurs de polymérisation par rapport au poids des monomères d'acide acrylique.

De manière préférée, la quantité d'inhibiteurs de polymérisation mise en œuvre dans le procédé de préparation des oligomères est identique à celle mesurée dans le produit de la réaction, c'est-à-dire que les inhibiteurs de polymérisation ne sont pas consommés au cours du procédé.

L'inhibiteur de polymérisation peut être sélectionné dans le groupe consistant en la phénothiazine, l'hydroquinone, l'éther monométhylique d'hydroquinone, les phénols encombrés tels que le diterbutyl para-crésol (BHT), le terbutyl hydroxyanisol (BHA) ou le di-tertiobutylcatéchol, la paraphénylène diamine, le TEMPO (2,2,6,6-tétraméthyl-1-piperidinyloxy), les dérivés du TEMPO tels que le OH-TEMPO et un mélange d'au moins deux de ces inhibiteurs. Selon un mode de réalisation, deux inhibiteurs différents sont utilisés au cours du procédé de préparation des oligomères, en particulier l'association :

- d'un inhibiteur de polymérisation de type phénolique, par exemple l'hydroquinone ou l'éther monométhylique d'hydroquinone, à une teneur allant de 10 ppm à 2000 ppm ou de 100 ppm à 1000 ppm et
- avec un inhibiteur de polymérisation azoté de type TEMPO ou un dérivé de TEMPO à une teneur allant de 1 ppm à 200 ppm, par exemple de 10 ppm à 60 ppm.

La réaction thermique d'oligomérisation de l'acide acrylique se fait avec une injection contrôlée d'air appauvri en oxygène quand les inhibiteurs de polymérisation sont des composés phénoliques.

Le temps de réaction thermique est généralement compris entre 1 heure et 20 heures.

Les oligomères de l'acide acrylique sont représentés par la formule (I) :

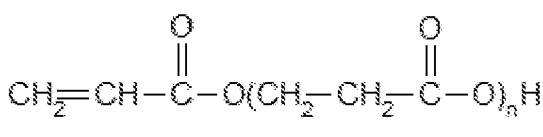

(I)

selon laquelle n est un entier compris entre 1 et 10 (bornes incluses).

Le mélange d'oligomères peut, en outre, comprendre de l'acide acrylique libre dans des proportions massiques pouvant aller de 10/99 à 99/1 (exprimées en proportion massique oligomère/acide).

Selon un mode de réalisation, le mélange d'oligomères de l'acide acrylique comprend de l'acide acrylique libre

dans des proportions massiques pouvant aller de 20/99 à 99/1 (exprimées en proportion massique oligomère/acide).

Selon un mode de réalisation, le procédé de préparation des oligomères comprend, en outre, une étape de purification à l'aide d'au moins une colonne de distillation pour éliminer l'eau et/ou l'acide acrylique résiduel.

Selon un mode de réalisation, le mélange d'oligomères de l'acide acrylique utilisé dans le cadre de la présente invention est caractérisé en ce que :

- la teneur en di-AA et tri-AA est supérieure à 20 % en poids, par exemple supérieure à 22 % ou à 24 % en poids par rapport au poids total des oligomères du mélange et
- la teneur en acide acrylique résiduel est inférieure à 60 % en poids, par exemple inférieure à 40 % ou à 20 % ou à 10% en poids par rapport au poids total des oligomères du mélange.

**Procédé de (co)polymérisation radicalaire en émulsion aqueuse**

La présente invention concerne un procédé de (co)polymérisation radicalaire en émulsion aqueuse d'au moins un mélange d'oligomères de l'acide acrylique représenté par la formule (I) :

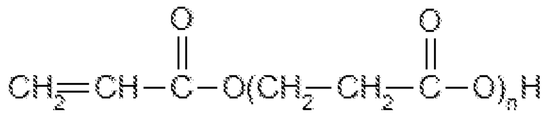

(I)

selon laquelle n est un entier compris entre 1 et 10 (bornes incluses),
lesdits oligomères étant préparés à partir de l'acide acrylique à une température comprise entre 50°C et 200°C en présence d'un catalyseur acide ou basique, d'eau et d'au moins un inhibiteur de polymérisation.

La polymérisation (ou copolymérisation) en émulsion selon la présente invention est réalisée dans un milieu aqueux. Si nécessaire, ledit mélange d'oligomères de l'acide acrylique peut être dilué avant d'être utilisé dans le procédé de la présente invention. Ainsi, ledit mélange peut se trouver sous la forme d'une solution aqueuse.

Un tel procédé de (co)polymérisation en émulsion aqueuse met en œuvre au moins un initiateur de polymérisation, au moins un agent tensioactif et éventuellement au moins un agent de transfert de chaîne.

Selon un mode de réalisation, l'initiateur de polymérisation est un sel persulfate, par exemple le persulfate d'ammonium ou le persulfate de sodium.

La polymérisation radicalaire en émulsion est réalisée en présence d'au moins un agent tensioactif, et éventuellement d'au moins un agent de transfert de chaîne, permettant de réguler la masse moléculaire des chaînes produites lors de la polymérisation.

En tant qu'agents tensioactifs susceptibles d'être utilisés, on peut citer :

- les tensioactifs anioniques tels qu'un sel d'acide gras, un sel alkylsulfate (comme le laurylsulfate de sodium), un sel d'alkyléther sulfate (comme le lauryl éther sulfate de sodium), un sel alkylbenzènesulfate (comme le dodécylbenzènesulfonate de sodium), un sel alkylphosphate ou un sel sulfosuccinate diester,
- les tensioactifs non ioniques tels qu'un polyoxyéthylène alkyléther ou un ester d'acide gras polyoxyéthylène,
- les tensioactifs cationiques tels que les halogénures d'alkyl- et/ou aryl-ammoniums quaternaires et
- les tensioactifs zwitterioniques ou amphotères tels que les tensioactifs comprenant un groupe bétaïne.

En tant qu'agents de transfert de chaîne susceptibles d'être utilisés, on peut citer les composés mercaptans comprenant au moins quatre atomes de carbone tels que le butylmercaptan, le n-octylmercaptan, le n-dodécylmercaptan, le tert-dodécylmercaptan.

Selon un mode de réalisation de la présente invention, le procédé consiste à copolymériser en émulsion aqueuse :

(a) lesdit oligomères de l'acide acrylique de formule (I) :

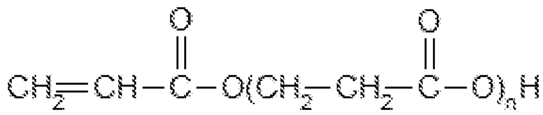

(I)

selon laquelle n est un entier compris entre 1 et 10 (bornes incluses),

(b) au moins un monomère hydrophobe non ionique présentant une fonction vinylique polymérisable,

(c) éventuellement au moins un monomère présentant une fonction vinylique polymérisable et une chaîne hydrocarbonée hydrophobe au moins en C10, de préférence de C12 à C36, éventuellement oxyalkylée, distinct du monomère (b),

(d) éventuellement au moins un monomère réticulant et

(e) éventuellement au moins un autre monomère additionnel, éventuellement non ionique, distinct du monomère (b).

Selon un mode de réalisation, le ou lesdits monomère(s) hydrophobe(s) non ionique(s) (b) est(sont) choisi(s) parmi les esters acryliques, par exemples choisi(s) parmi les acrylates d'alkyle en C1-C8 ou les méthacrylates d'alkyle en C1-C8 tels que l'acrylate de méthyle,
l'acrylate d'éthyle, l'acrylate de butyle, l'acrylate de 2-éthyle-hexyle, le méthacrylate de méthyle, le méthacrylate d'éthyle, le méthacrylate de butyle et leurs mélanges.

Le ou lesdits monomère(s) hydrophobe(s) non ionique(s) (b) peu(ven)t représenter de 45 % à 75 % en poids, en particulier de 48 % à 68 % en poids et plus particulièrement de 50 % à 64 % en poids par rapport au poids total de monomères formant le polymère. Selon un mode de réalisation, le ou lesdits monomère(s) (c) est(sont) de formule (II) :

T-A-Z (II)

dans laquelle :

- T représente une fonction polymérisable permettant la copolymérisation du monomère (c),
- A représente une chaîne polymérique constituée de :
  - m motifs d'oxyde d'alkylène de formule $-CH_2CHR_1O-$ avec $R_1$ représentant un groupement alkyle comprenant de 1 à 4 carbones, par exemple un groupement méthyle ou éthyle, et m variant de 0 à 150,
  - p motifs d'oxyde d'alkylène de formule $-CH_2CHR_2O-$ avec $R_2$ représentant un groupement alkyle comprenant de 1 à 4 carbones, par exemple un groupement méthyle ou éthyle, et p allant de 0 à 150 et
  - n motifs d'oxyde d'éthylène avec n variant de 0 à 150, ou de 10 ou 15 à 150, ou de 10 ou 15 à 100, ou de 15 à 50, ou de 15 à 30,

  dans laquelle les motifs d'oxyde d'alkylène de formule $-CH_2CHR_1O-$, les motifs d'oxyde d'alkylène de formule $-CH_2CHR_2O-$ et les motifs d'oxyde d'éthylène sont en blocs, alternés ou statistiques et
- Z représente une chaîne grasse, saturée ou insaturée, linéaire, ramifiée, cyclique ou polycyclique, d'au moins 10 atomes de carbone, comportant éventuellement un ou plusieurs hétéroatome(s) tel(s) que, par exemple, O, S, N ou P.

Selon un mode de réalisation, le ou lesdits monomère(s) (c) représente(nt) de 0 % à 20 % en poids, par exemple de 2 % à 15% en poids ou de 4 % à 10% en poids par rapport au poids total de monomères formant le polymère.

Par « chaîne grasse », on entend une chaîne hydrocarbonée aliphatique d'un acide gras, linéaire, ramifiée, cyclique ou polycyclique comprenant au moins 10 atomes de carbone, par exemple de 12 à 36 atomes de carbone, comportant éventuellement un ou plusieurs hétéroatome(s) tel(s) que, par exemple, O, S, N ou P.

Selon un mode de réalisation, la chaîne Z est une chaîne ramifiée comportant 16 atomes de carbone.

L'extrémité T représente plus particulièrement un radical contenant une fonction insaturée polymérisable appartenant au groupe des esters acryliques, méthacryliques, maléiques, itaconiques ou crotoniques. L'extrémité T peut notamment être choisie parmi les groupements acrylates, méthacrylates, allyliques, vinyliques, méthacryluréthanes et alpha, alpha-diméthyl-m-isopropényls benzyls uréthanes.

Selon un mode de réalisation, le monomère (c) répond à la formule (III) suivante :

$CH_2=C(R_1)-COO-A-Z$ (III)

dans laquelle :

- $R_1$ représente H ou $CH_3$ et
- A et Z ont la même définition que dans la formule (II) ci-dessus.

Selon un mode de réalisation particulier, A dans les formules (II) et (III) précitées représente une chaîne polymérique constituée de 15 à 150 motifs d'oxyde d'éthylène, en particulier de 15 à 50 motifs d'oxyde d'éthylène et notamment de 15 à 30 motifs d'oxyde d'éthylène.

A titre d'exemples, le monomère (c) peut répondre à la formule (II) ou (III) dans laquelle A et Z sont tels que :

- m et p sont nuls, n vaut 25, $R_1$ représente $CH_3$, Z est une chaîne ramifiée comportant 16 atomes de carbone, à savoir le 2-hexyl-1-décanyle,
- m et p sont nuls, n vaut 25, $R_1$ représente $CH_3$, Z est une chaîne ramifiée comportant 32 atomes de carbone,
- m et p sont nuls, n vaut 25, $R_1$ représente $CH_3$, Z est une chaîne linéaire comportant 22 atomes de carbone,
- m et p sont nuls, n vaut 36, $R_1$ représente $CH_3$, Z est une chaîne ramifiée comportant 20 atomes de carbone, à savoir le 2-octyl-1-dodécyle ou
- m et p sont nuls, n vaut 30, $R_1$ représente $CH_3$, Z est une chaîne oxo comportant 12 atomes de carbone.

Selon un mode de réalisation, le ou lesdits monomère(s) réticulant(s) (d) est(sont) choisi(s) dans le groupe consistant en le tri(méth)acrylate de triméthylolpropane, le tri(méth)acrylate de triméthylolpropane éthoxylé, le di(méth)acrylate d'éthylène glycol, le méthylènebisacrylamide, le triallylcyanurate, le diallylphtalate, le diallylmaléate, l'éthylène glycol dicyclopentényl éther méthacrylate, l'éthylène glycol dicyclopentényl éther acrylate, le dicyclopentényl éther acrylate et leurs mélanges.

Selon ce mode de réalisation, le ou lesdits monomère(s) réticulant(s) (d) représente(nt) moins de 8 % en poids, par exemple moins de 5 % ou moins de 2 % en poids par rapport au poids total de monomères formant le polymère.

Selon un mode de réalisation, le procédé de polymérisation radicalaire en émulsion aqueuse met en œuvre un ou plusieurs monomère(s) additionnel(s) (e) qui peu(ven)t notamment être choisi(s) parmi :

- l'acide 2-acrylamido-2-méthylpropane sulfonique (AMPS),
- les monomères de formule (el) :

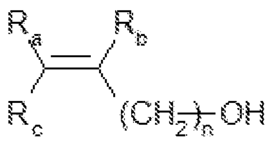

(e1)

dans laquelle :

$R_a$, $R_b$ et $R_c$ représentent, indépendamment les uns des autres, H ou $CH_3$ et
n est un entier égal à 1 ou à 2 et

- les monomères de formule (e2) :

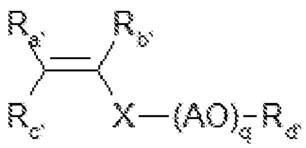

(e2)

dans laquelle :

- $R_{a'}$, $R_{b'}$, $R_{c'}$ et $R_{d'}$ représentent, indépendamment les uns des autres, H ou $CH_3$,
- X représente (C=O) ou $(CH_2)_r$ avec r = 0, 1 ou 2,
- (AO) représente une chaîne polyalkoxylée constituée d'unités alkoxylées, réparties en blocs, alternées ou

statistiques, choisies parmi les unités éthoxylées EO, les unités propoxylées PO et les unités butoxylées BO et

- q est nul ou représente un nombre entier variant de 1 à 150.

Il est entendu que les différents modes particuliers décrits pour chacun des monomères hydrophobes non ioniques, monomères réticulants, monomères présentant une fonction vinylique polymérisable et une chaîne hydrocarbonée hydrophobe et monomères additionnels éventuellement non ioniques du polymère selon l'invention peuvent être combinés.

Le ou lesdits monomère(s) additionnel(s) éventuellement non ionique(s) (e) peu(ven)t représenter moins de 50 % en poids, en particulier moins de 40 % en poids et plus particulièrement de 1 % à 30 % en poids par rapport au poids total de monomères formant le copolymère selon l'invention.

**(Co)Polymère acrylique associatif comprenant au moins un mélange d'oligomères de l'acide acrylique**

La présente invention concerne également un (co)polymère acrylique associatif comprenant au moins un mélange d'oligomères de l'acide acrylique tel que décrit précédemment, c'est-à-dire représentés par la formule (I) :

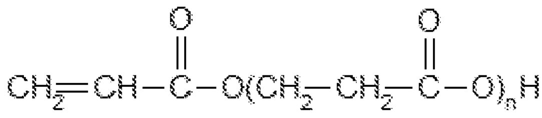

(I)

selon laquelle n est un entier compris entre 1 et 10 (bornes incluses),
lesdits oligomères étant préparés à partir de l'acide acrylique à une température comprise entre 50°C et 200°C en présence d'un catalyseur acide ou basique, d'eau et d'au moins un inhibiteur de polymérisation.

Par « comprenant », on entend que ledit (co)polymère résulte de la polymérisation des monomères qui suivent.

De manière préférée, l'invention fournit un (co)polymère acrylique associatif comprenant au moins un mélange d'oligomères de l'acide acrylique, représentés par la formule (I) et comprenant de 200 ppm à 500 ppm d'au moins un inhibiteur de polymérisation :

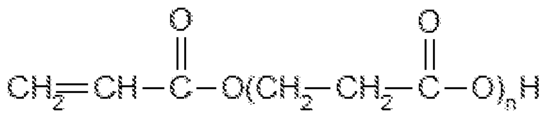

(I)

selon laquelle n est un entier compris entre 1 et 10 (bornes incluses), lesdits oligomères étant préparés à partir de l'acide acrylique à une température comprise entre 50°C et 200°C en présence d'un catalyseur acide ou basique, d'eau et d'au moins un inhibiteur de polymérisation.

Selon un mode de réalisation de la présente invention, ledit copolymère comprend :

(a) lesdits oligomères de l'acide acrylique de formule (I) :

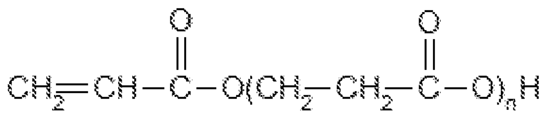

(I)

selon laquelle n est un entier compris entre 1 et 10 (bornes incluses),
(b) au moins un monomère hydrophobe non ionique présentant une fonction vinylique polymérisable,
(c) éventuellement un monomère présentant une fonction vinylique polymérisable et une chaîne hydrocarbonée

hydrophobe au moins en C10, de préférence de C12 à C36, éventuellement oxyalkylée, distinct du monomère (b),
(d) éventuellement un monomère réticulant et
(e) éventuellement un autre monomère additionnel, éventuellement non ionique, distinct du monomère (b).

Selon un mode de réalisation préféré de la présente invention, ledit copolymère est constitué :

(a) d'au moins un mélange d'oligomères de l'acide acrylique de formule (I) comprenant de 200 ppm à 500 ppm d'au moins un inhibiteur de polymérisation :

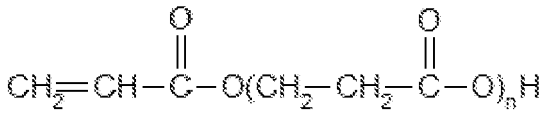

(I)

selon laquelle n est un entier compris entre 1 et 10 (bornes incluses),
(b) de l'acrylate d'éthyle comme monomère hydrophobe non ionique présentant une fonction vinylique polymérisable,
(c) éventuellement d'un monomère présentant une fonction vinylique polymérisable et une chaîne hydrocarbonée hydrophobe au moins en C10, de préférence de C12 à C36, éventuellement oxyalkylée, distinct du monomère (b).

Selon une variante de ce mode de réalisation, ledit copolymère résulte de la polymérisation de monomères (a) et de monomères (b) exclusivement. Autrement dit, ledit copolymère est de type « Alkali Soluble Emulsion » ou ASE.

Selon une autre variante de ce mode de réalisation, ledit copolymère consiste en :

(a) de 1 % à 99 % en poids d'oligomères de l'acide acrylique de formule (I) :

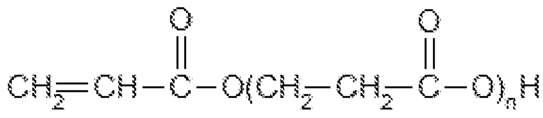

(I)

selon laquelle n est un entier compris entre 1 et 10 (bornes incluses) et
(b) de 1 % à 99 % en poids d'au moins un monomère hydrophobe non ionique présentant une fonction vinylique polymérisable, par exemple choisi parmi les esters acryliques ou, par exemple, choisi dans le groupe consistant en les acrylates d'alkyle en C1-C8 et les méthacrylates d'alkyle en C1-C8. Le monomère peut, par exemple, être choisi dans le groupe consistant en l'acrylate de méthyle, l'acrylate d'éthyle, l'acrylate de butyle, l'acrylate de 2-éthylehexyle, le méthacrylate de méthyle, le méthacrylate d'éthyle, le méthacrylate de butyle et leurs mélanges.

Selon un autre mode de réalisation de la présente invention, ledit copolymère comprend :

(a) lesdits oligomères de l'acide acrylique de formule (I) :

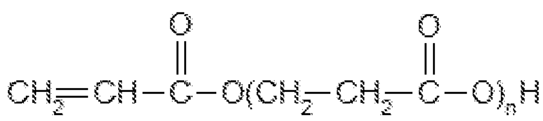

(I)

selon laquelle n est un entier compris entre 1 et 10 (bornes incluses),
(b) au moins un monomère hydrophobe non ionique présentant une fonction vinylique polymérisable,
(c) au moins un monomère présentant une fonction vinylique polymérisable et une chaîne hydrocarbonée hydrophobe au moins en C10, de préférence de C12 à C36, éventuellement oxyalkylée, distinct du monomère (b),
(d) éventuellement un monomère réticulant et
(e) éventuellement un autre monomère additionnel, éventuellement non ionique, distinct du monomère (b).

Selon ce mode de réalisation, ledit copolymère est de type HASE, c'est-à-dire qu'il comprend des monomères de type associatif permettant un épaississement de type associatif lorsqu'il est utilisé dans une formulation.
Les définitions et caractéristiques techniques des différents monomères utilisés dans le procédé de la présente invention sont, par ailleurs, reprises à l'identique pour ce qui est de la définition du (co)polymère acrylique associatif et peuvent être combinées.

**Utilisation des (co)polymères selon l'invention et formulations les contenant**

Les (co)polymères acryliques associatifs peuvent être utilisés comme épaississant de formulations aqueuses éventuellement pigmentées.
Un objet de la présente invention concerne également une formulation aqueuse éventuellement pigmentée contenant le (co)polymère décrit précédemment. Cette formulation aqueuse peut être choisie parmi les peintures en phase aqueuse, les dispersions, les vernis, les sauces de couchage, les formulations cosmétiques, les formulations détergentes, les formulations textiles, les boues de forage, les formulations de pâte à joint pour plaques de plâtre, les formulations pour céramique, les formulations pour cuir, les formulations de plâtre ou les formulations pour liants hydrauliques telles que les formulations de mortier.

**EXEMPLES**

**Exemple 1 (hors invention)**

*Synthèse d'un polymère de type HASE en procédé semi-batch*

Le protocole de synthèse du polymère réalisé en semi-batch est le suivant :
On introduit dans un réacteur de 1 L, agité et chauffé à l'aide d'un bain d'huile, 252 g d'eau désionisée et 3,5 g de Sodium Dodécyl Sulfate (SDS).
On prépare dans un bécher le pré-mélange comprenant les ingrédients suivants :

- acrylate d'éthyle : 179,9 g,
- oligomères de l'acide acrylique Sipomer® B-CEA : 82,3 g,
- macromonomère noté MA monomère (c) de formule (II) dans lequel m et p sont nuls, n vaut 25, T représente $CH_2$=C($CH_3$)-COO, Z est une chaîne ramifiée comportant 16 atomes de carbone, à savoir le 2- hexyldécanyl : 43,8 g,
- N-dodécylmercaptan : 0,64 g,
- eau désionisée : 290 ,9 g et
- SDS : 3,5 g.

Ce pré-mélange est mis en agitation afin de former une émulsion.
On prépare une solution constituée de 0,55 g de persulfate d'ammonium et 74,5 g d'eau. On injecte dans le réacteur en parallèle cette solution d'initiateurs de polymérisation durant 2 heures et le pré-mélange de monomères durant 2 heures.
On ajoute alors 18 g d'eau.
On cuit à nouveau une heure à la température de 86°C + 2°C. Puis on ajoute 0,27 g de persulfate d'ammonium et 16 g d'eau désionisée.
L'ensemble est ensuite refroidi à température ambiante.
Résultats : retard de polymérisation, accumulation de monomères, forte exothermie

**Exemple 2 (selon l'invention)**

L'exemple 1 est repris à l'identique, à l'exception du fait que l'on remplace les 82,3 g d'oligomères de l'acide acrylique Sipomer® par 91,5 g d'oligomères de l'acide acrylique préparés selon le procédé suivant :
Dans un réacteur tricol, parfaitement agité, équipé d'une sonde de température et surmonté d'un réfrigérant, on a introduit :

- 200 g d'acide acrylique,

- 200 ppm d'Ester Méthylique d'HydroQuinone (EMHQ),
- 1 % d'eau et
- 20 % de résine Amberlist A16.

Le milieu réactionnel a été agité pendant 8 heures à 97°C sous bullage d'air.
Après 8h, le milieu réactionnel comprend la même quantité d'EMHQ.

Caractéristiques du copolymère de type HASE obtenu :

ES : 30,1 %
Diamètres des particules (nm) : 350
AA résiduel : 210 ppm
AE résiduel : 310 ppm

## Revendications

1. Procédé de (co)polymérisation radicalaire en émulsion aqueuse d'au moins un mélange d'oligomères de l'acide acrylique représentés par la formule (I) :

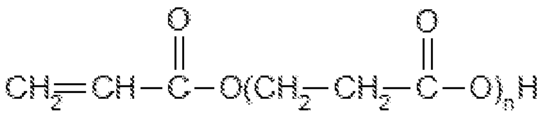

(I)

selon laquelle n est un entier compris entre 1 et 10 (bornes incluses),
lesdits oligomères étant préparés à partir de l'acide acrylique à une température comprise entre 50°C et 200°C en présence d'un catalyseur acide ou basique, d'eau et d'au moins un inhibiteur de polymérisation.

2. Procédé selon la revendication 1, selon lequel ledit mélange d'oligomères de l'acide acrylique contient de 10 ppm à 2 000 ppm d'inhibiteurs de polymérisation par rapport au poids total du mélange.

3. Procédé selon l'une quelconque des revendications précédentes, selon lequel le milieu réactionnel utilisé pour préparer le mélange d'oligomères contient une quantité d'eau comprise entre 0,01 % et 20 % en poids par rapport au poids total d'acide acrylique mis en œuvre.

4. Procédé selon l'une quelconque des revendications précédentes, consistant à copolymériser en émulsion aqueuse :

(a) lesdits oligomères de l'acide acrylique de formule (I) :

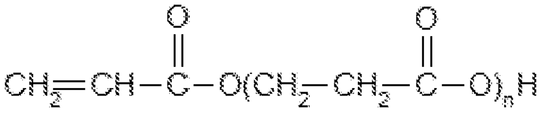

(I)

selon laquelle n est un entier compris entre 1 et 10 (bornes incluses),
(b) au moins un monomère hydrophobe non ionique présentant une fonction vinylique polymérisable,
(c) éventuellement au moins un monomère présentant une fonction vinylique polymérisable et une chaîne hydrocarbonée hydrophobe au moins en C10, de préférence de C12 à C36, éventuellement oxyalkylée, distinct du monomère (b),

(d) éventuellement au moins un monomère réticulant et
(e) éventuellement au moins un autre monomère additionnel, éventuellement non ionique, distinct du monomère (b).

**5.** Procédé selon la revendication 4, dans lequel le ou lesdits monomère(s) hydrophobe(s) non ionique(s) (b) est(sont) choisi(s) parmi les acrylates d'alkyle en C1-C8 ou les méthacrylates d'alkyle en C1-C8 tels que l'acrylate de méthyle, l'acrylate d'éthyle, l'acrylate de butyle, l'acrylate de 2-éthyle-hexyle, le méthacrylate de méthyle, le méthacrylate d'éthyle, le méthacrylate de butyle et leurs mélanges

**6.** Procédé selon la revendication 4 ou 5, dans lequel le ou lesdits monomère(s) réticulant(s) (d) est(sont) choisi(s) dans le groupe consistant en le tri(méth)acrylate de triméthylolpropane, le tri(méth)acrylate de triméthylolpropane éthoxylé, le di(méth)acrylate d'éthylène glycol, le méthylènebisacrylamide, le triallylcyanurate, le diallylphtalate, le diallylmaléate, l'éthylène glycol dicyclopentényl éther méthacrylate, l'éthylène glycol dicyclopentényl éther acrylate, le dicyclopentényl éther acrylate et leurs mélanges.

**7.** Procédé selon l'une des revendications 4 à 6, selon lequel le ou lesdits monomère(s) (c) est(sont) de formule (II) :

T-A-Z (II)

dans laquelle :

- T représente une fonction polymérisable permettant la copolymérisation du monomère (c),
- A représente une chaîne polymérique constituée de :
  - m motifs d'oxyde d'alkylène de formule $-CH_2CHR_1O-$ avec $R_1$ représentant un groupement alkyle comprenant de 1 à 4 carbones, par exemple un groupement méthyle ou éthyle, et m variant de 0 à 150,
  - p motifs d'oxyde d'alkylène de formule $-CH_2CHR_2O-$ avec $R_2$ représentant un groupement alkyle comprenant de 1 à 4 carbones, par exemple un groupement méthyle ou éthyle, et p allant de 0 à 150 et
  - n motifs d'oxyde d'éthylène avec n variant de 0 à 150, ou de 10 ou 15 à 150, ou de 10 ou 15 à 100, ou de 15 à 50, ou de 15 à 30,

dans laquelle les motifs d'oxyde d'alkylène de formule $-CH_2CHR_1O-$, les motifs d'oxyde d'alkylène de formule $-CH_2CHR_2O-$ et les motifs d'oxyde d'éthylène sont en blocs, alternés ou statistiques et
- Z représente une chaîne grasse, saturée ou insaturée, linéaire, ramifiée, cyclique ou polycyclique, d'au moins 10 atomes de carbone, comportant éventuellement un ou plusieurs hétéroatome(s) tel(s) que, par exemple, O, S, N ou P.

**8.** Procédé selon l'une quelconque des revendications 4 à 7, selon lequel le ou lesdits monomère(s) additionnel(s) (e) est(sont) choisi(s) parmi :

- l'acide 2-acrylamido-2-méthylpropane sulfonique (AMPS),
- les monomères de formule (el) :

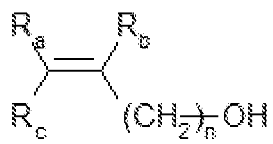
(e1)

dans laquelle :

$R_a$, $R_b$ et $R_c$ représentent, indépendamment les uns des autres, H ou $CH_3$ et
n est un entier égal à 1 ou à 2 et

- les monomères de formule (e2) :

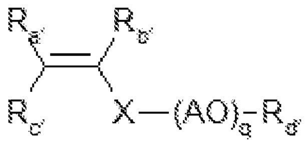

(e2)

dans laquelle :

- $R_{a'}$, $R_{b'}$, $R_{c'}$ et $R_{d'}$ représentent, indépendamment les uns des autres, H ou $CH_3$,
- X représente (C=O) ou $(CH_2)_r$ avec r = 0, 1 ou 2,
- (AO) représente une chaîne polyalkoxylée constituée d'unités alkoxylées, réparties en blocs, alternées ou statistiques, choisies parmi les unités éthoxylées EO, les unités propoxylées PO et les unités butoxylées BO et
- q est nul ou représente un nombre entier variant de 1 à 150.

**9.** Procédé selon l'une quelconque des revendications précédentes, selon lequel sont, en outre, mis en œuvre :

- au moins un initiateur de polymérisation,
- au moins un agent tensioactif et
- éventuellement au moins un agent de transfert de chaîne.

**10.** (Co)polymère acrylique associatif comprenant au moins un mélange d'oligomères de l'acide acrylique, comprenant de 200 ppm à 500 ppm d'au moins un inhibiteur de polymérisation, représentés par la formule (I) :

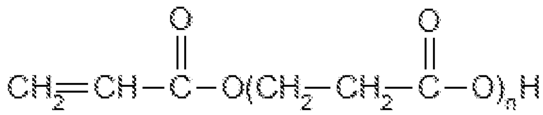

(I)

selon laquelle n est un entier compris entre 1 et 10 (bornes incluses),
lesdits oligomères étant préparés à partir de l'acide acrylique à une température comprise entre 50°C et 200°C en présence d'un catalyseur acide ou basique, d'eau et d'au moins un inhibiteur de polymérisation.

**11.** (Co)polymère selon la revendication 10 constitué :

(a) d'au moins un mélange d'oligomères de l'acide acrylique de formule (I), comprenant de 200 ppm à 500 ppm d'au moins un inhibiteur de polymérisation :

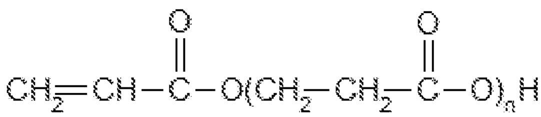

(I)

selon laquelle n est un entier compris entre 1 et 10 (bornes incluses),
(b) de l'acrylate d'éthyle comme monomère hydrophobe non ionique présentant une fonction vinylique polymérisable,
(c) éventuellement d'un monomère présentant une fonction vinylique polymérisable et une chaîne hydrocarbonée hydrophobe au moins en C10, de préférence de C12 à C36, éventuellement oxyalkylée, distinct du monomère (b).

**Patentansprüche**

1. Verfahren zur wässrigen radikalischen Emulsions-(co)polymerisation von mindestens einer Mischung von Acrylsäureoligomeren, die durch die Formel (I) wiedergegeben werden:

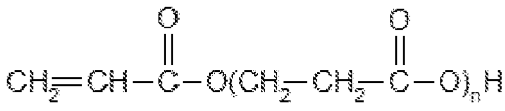

(I)

gemäß der n für eine ganze Zahl zwischen 1 und 10 (einschließlich der Grenzen) steht,
wobei die Oligomere bei einer Temperatur zwischen 50 °C und 200 °C in Gegenwart von einem sauren oder basischen Katalysator, von Wasser und von mindestens einem Polymerisationsinhibitor aus Acrylsäure hergestellt werden.

2. Verfahren nach Anspruch 1, gemäß dem die Mischung von Acrylsäureoligomeren 10 ppm bis 2000 ppm Polymerisationsinhibitoren, bezogen auf das Gesamtgewicht der Mischung, enthält.

3. Verfahren nach einem der vorhergehenden Ansprüche, gemäß dem das zur Herstellung der Mischung von Oligomeren verwendete Reaktionsmedium eine Wassermenge zwischen 0,01 und 20 Gew.-%, bezogen auf das Gesamtgewicht der eingesetzten Acrylsäure, enthält.

4. Verfahren nach einem der vorhergehenden Ansprüche, das darin besteht, dass man in wässriger Emulsion

(a) die Acrylsäureoligomere der Formel (I):

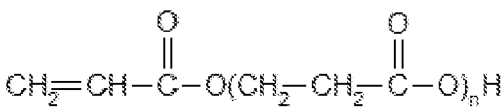

(I)

gemäß der n für eine ganze Zahl zwischen 1 und 10 (einschließlich der Grenzen) steht,
(b) mindestens ein nichtionisches hydrophobes Monomer mit einer polymerisierbaren Vinylfunktion,
(c) gegebenenfalls mindestens ein von Monomer (b) verschiedenes Monomer mit einer polymerisierbaren Vinylfunktion und einer hydrophoben Kohlenwasserstoffkette mit mindestens 10 C-Atomen und vorzugsweise 12 bis 36 C-Atomen, die gegebenenfalls oxyalkyliert ist,
(d) gegebenenfalls mindestens ein vernetzendes Monomer und
(e) gegebenenfalls mindestens ein weiteres zusätzliches, von Monomer (b) verschiedenes Monomer, das gegebenenfalls nichtionisch ist, copolymerisiert.

5. Verfahren nach Anspruch 4, wobei das nichtionische hydrophobe Monomer bzw. die nichtionischen hydrophoben Monomere (b) aus C1-C8-Alkylacrylaten oder C1-C8-Alkylmethacrylaten wie Methylacrylat, Ethylacrylat, Butylacrylat, 2-Ethylhexylacrylat, Methylmethacrylat, Ethylmethacrylat, Butylmethacrylat und Mischungen davon ausgewählt wird bzw. werden.

6. Verfahren nach Anspruch 4 oder 5, wobei das vernetzende Monomer bzw. die vernetzenden Monomere (d) aus der Gruppe bestehend aus Trimethylolpropantri(meth)acrylat, ethoxyliertem Trimethylolpropantri(meth)acrylat, Ethylenglykoldi(meth)-acrylat, Methylenbisacrylamid, Triallylcyanurat, Diallylphthalat, Diallylmaleat, Ethylenglykoldicyclopentenylethermethacrylat, Ethylenglykoldicyclopentenyletheracrylat, Dicyclopentenyletheracrylat und Mischungen davon ausgewählt wird bzw. werden.

7. Verfahren nach einem der Ansprüche 4 bis 6, gemäß dem das Monomer bzw. die Monomere (c) die Formel (II) aufweist bzw. aufweisen:

T-A-Z (II)

in der:

- T für eine polymerisierbare Funktion, die die Copolymerisation des Monomers (c) erlaubt, steht,
- A für eine Polymerkette steht, die aus

  - m Alkylenoxid-Einheiten der Formel $-CH_2CHR_1O-$, wobei $R_1$ für eine Alkylgruppe mit 1 bis 4 Kohlenstoffatomen, beispielsweise eine Methyl- oder Ethylgruppe, steht und m von 0 bis 150 variiert,
  - p Alkylenoxid-Einheiten der Formel $-CH_2CHR_2O-$, wobei $R_2$ für eine Alkylgruppe mit 1 bis 4 Kohlenstoffatomen, beispielsweise eine Methyl- oder Ethylgruppe, steht und p im Bereich von 0 bis 150 liegt, und
  - n Ethylenoxid-Einheiten, wobei n von 0 bis 150 oder von 10 oder 15 bis 150 oder von 10 oder 15 bis 100 oder von 15 bis 50 oder von 15 bis 30 variiert,

besteht, wobei die Alkylenoxid-Einheiten der Formel $-CH_2CHR_1O-$, die Alkylenoxid-Einheiten der Formel $-CH_2CHR_2O-$ und die Ethylenoxid-Einheiten blockartig, alternierend oder statistisch angeordnet sind, und
- Z für eine gesättigte oder ungesättigte, lineare, verzweigte, cyclische oder polycyclische Fettkette mit mindestens 10 Kohlenstoffatomen, die gegebenenfalls ein oder mehrere Heteroatome wie beispielsweise O, S, N oder P, umfasst, steht.

**8.** Verfahren nach einem der Ansprüche 4 bis 7, wobei das zusätzliche Monomer bzw. die zusätzlichen Monomere aus

- 2-Acrylamido-2-methylpropansulfonsäure (AMPS),
- den Monomeren der Formel (e1):

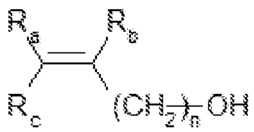
(e1)

in der:

$R_a$, $R_b$ und $R_c$ unabhängig voneinander für H oder $CH_3$ stehen und
n für eine ganze Zahl mit einem Wert von 1 oder 2 steht, und

- den Monomeren der Formel (e2):

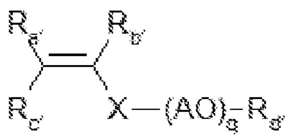
(e2)

in der:

- $R_{a'}$, $R_{b'}$, $R_{c'}$ und $R_{d'}$ unabhängig voneinander für H oder $CH_3$ stehen,
- X für (C=O) oder $(CH_2)_r$ mit r = 0, 1 oder 2 steht,
- (AO) für eine Polyalkoxylkette steht, die aus blockartig, alternierend oder statistisch angeordneten alkoxylierten Einheiten, die aus Ethoxyleinheiten EO, Propoxyleinheiten PO und Butoxyleinheiten BO ausgewählt sind, besteht, und
- q für null oder eine ganze Zahl im Bereich von 1 bis 150 steht,

ausgewählt wird bzw. werden.

**9.** Verfahren nach einem der vorhergehenden Ansprüche, gemäß dem außerdem

- mindestens ein Polymerisationsinitiator,

- mindestens ein Tensid und
- gegebenenfalls mindestens ein Kettenübertragungsmittel

eingesetzt werden.

**10.** Assoziatives Acryl(co)polymer, umfassend mindestens eine 200 ppm bis 500 ppm mindestens eines Polymerisationsinhibitors umfassende Mischung von Acrylsäureoligomeren, die durch die Formel (I) wiedergegeben werden:

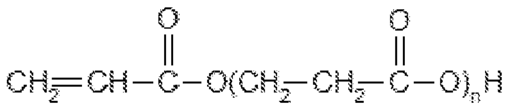

(I)

gemäß der n für eine ganze Zahl zwischen 1 und 10 (einschließlich der Grenzen) steht, wobei die Oligomere bei einer Temperatur zwischen 50 °C und 200 °C in Gegenwart von einem sauren oder basischen Katalysator, von Wasser und von mindestens einem Polymerisationsinhibitor aus Acrylsäure hergestellt werden.

**11.** (Co)polymer nach Anspruch 10, bestehend aus:

(a) mindestens einer 200 ppm bis 500 ppm mindestens eines Polymerisationsinhibitors umfassenden Mischung von Acrylsäureoligomeren, die durch die Formel (I) wiedergegeben werden:

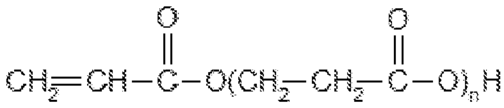

(I)

gemäß der n für eine ganze Zahl zwischen 1 und 10 (einschließlich der Grenzen) steht,
(b) Ethylacrylat als nichtionisches hydrophobes Monomer mit einer polymerisierbaren Vinylfunktion,
(c) gegebenenfalls mindestens einem von Monomer (b) verschiedenen Monomer mit einer polymerisierbaren Vinylfunktion und einer hydrophoben Kohlenwasserstoffkette mit mindestens 10 C-Atomen und vorzugsweise 12 bis 36 C-Atomen, die gegebenenfalls oxyalkyliert ist.

## Claims

**1.** A method of aqueous emulsion radical (co)polymerization of at least one mixture of oligomers of acrylic acid represented by the formula (I) :

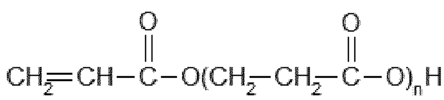

(I)

according to which n is an integer of between 1 and 10 (inclusive), said oligomers being prepared from acrylic acid at a temperature of between 50°C and 200°C in the presence of a basic or acid catalyst, of water and of at least one polymerization inhibitor.

**2.** The method according to claim 1, according to which said mixture of oligomers of acrylic acid contains from 10 ppm to 2,000 ppm of polymerization inhibitors based on the total weight of the mixture.

**3.** The method according to any one of the preceding claims, according to which the reactional medium used to prepare the mixture of oligomers contains an amount of water of between 0.01% and 20% by weight based on the total

weight of acrylic acid used.

4. The method according to any one of the preceding claims, comprising copolymerizing in an aqueous emulsion:

a) said oligomers of acrylic acid of formula (I):

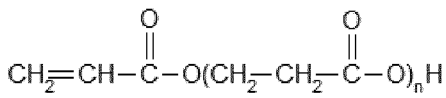

(I)

according to which n is an integer of between 1 and 10 (inclusive),
b) at least one nonionic hydrophobic monomer having a polymerizable vinyl group,
c) optionally at least one monomer having a polymerizable vinyl group and a hydrophobic hydrocarbon chain at least in $C_{10}$, preferably from $C_{12}$ to $C_{36}$, optionally oxyalkylated, distinct from the monomer (b),
d) optionally at least one cross-linking monomer and
e) optionally at least one other additional monomer, optionally nonionic, distinct from the monomer (b).

5. The method according to claim 4, in which said nonionic hydrophobic monomer(s) (b) are chosen from among $C_1$-$C_8$ alkyl acrylates or $C_1$-$C_8$ alkyl methacrylates such as methyl acrylate, ethyl acrylate, butyl acrylate, 2-ethyl-hexyl acrylate, methyl methacrylate, ethyl methacrylate, butyl methacrylate and their mixtures.

6. The method according to claim 4 or 5, in which said cross-linking monomer(s) (d) are chosen from the group consisting of trimethylolpropane tri(meth)acrylate, ethoxylated trimethylolpropane tri(meth)acrylate, ethylene glycol di(meth)acrylate, methylenebisacrylamide, triallylcyanurate, diallylphtalate, diallylmaleate, ethylene glycol dicyclopentenyl ether methacrylate, ethylene glycol dicyclopentenyl ether acrylate, dicyclopentenyl ether acrylate and their mixtures.

7. The method according to claims 4 to 6, according to which said monomer(s) (c) are of formula (II):

$$T\text{-}A\text{-}Z \qquad (II)$$

in which:

- T represents a polymerizable group allowing the copolymerization of the monomer (c),
- A represents a polymeric chain constituted of:

    - m units of alkylene oxide of formula $-CH_2CHR_1O-$ with $R_1$ representing an alkyl group comprising from 1 to 4 carbons, for example an ethyl or methyl group, and m varying from 0 to 150,
    - p units of alkylene oxide of formula $-CH_2CHR_2O-$ with $R_2$ representing an alkyl group comprising from 1 to 4 carbons, for example an ethyl or methyl group, and p varying from 0 to 150 and
    - n units of ethylene oxide with n varying from 0 to 150, or from 10 or 15 to 150, or from 10 or 15 to 100, or from 15 to 50, or from 15 to 30,
    in which the alkylene oxide units of formula $-CH_2CHR_1O-$, the alkylene oxide units of formula $-CH_2CHR_2O-$ and the ethylene oxide units are arranged in blocks, alternating or random and

- Z represents a polycyclic or cyclic, branched, linear, saturated or unsaturated, fatty chain of at least 10 carbon atoms, optionally comprising one or several heteroatom(s) such as, for example, O, S, N or P.

8. The method according to any one of claims 4 to 7, according to which said additional monomer(s) (e) are chosen from among:

- 2-acrylamido-2-methylpropanesulfonic acid (AMPS),
- the monomers of formula (e1):

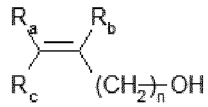

(e1)

in which:

$R_a$, $R_b$ and $R_c$ represent, independently of one another, H or $CH_3$ and n is an integer equal to 1 or to 2 and

- the monomers of formula (e2):

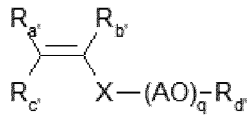

(e2)

in which:

- $R_{a'}$, $R_{b'}$, $R_{c'}$ and $R_{d'}$ represent, independently of one another, H or $CH_3$,
- X represents (C=O) or $(CH_2)_r$ with r = 0, 1 or 2,
- (AO) represents a polyalkoxylated chain constituted of alkoxylated units, arranged in blocks, alternating or random, chosen from among the ethoxylated units EO, the propoxylated units PO and the butoxylated units BO and
- q is equal to 0 or represents an integer varying from 1 to 150.

**9.** The method according to any one of the preceding claims, according to which the followings are further used:

- at least one polymerization initiator,
- at least one surface-active agent and
- optionally at least one chain transfer agent.

**10.** An associative acrylic (co)polymer comprising at least one mixture of oligomers of acrylic acid, comprising from 200 ppm to 500 ppm of at least one polymerization inhibitor, represented by the formula (I):

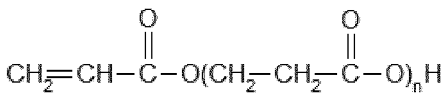

(I)

according to which n is an integer of between 1 and 10 (inclusive),
said oligomers being prepared from acrylic acid at a temperature of between 50°C and 200°C in the presence of a basic or acid catalyst, of water and of at least one polymerization inhibitor.

**11.** The (co)polymer according to claim 10 constituted:

a) of at least one mixture of oligomers of acrylic acid of formula (I), comprising from 200 ppm to 500 ppm of at least one polymerization inhibitor:

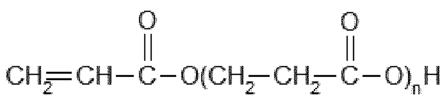

(I)

according to which n is an integer of between 1 and 10 (inclusive),
b) of ethyl acrylate as a nonionic hydrophobic monomer having a polymerizable vinyl group,
c) optionally of one monomer having a polymerizable vinyl group and a hydrophobic hydrocarbon chain at least

in $C_{10}$, preferably from $C_{12}$ to $C_{36}$, optionally oxyalkylated, distinct from the monomer (b).

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 4267365 A
- US 4359564 A
- US 2012100084 A
- WO 9931153 A
- WO 2014099512 A